(19) Europäisches Patentamt
European Patent Office
Office européen des brevets

(11) **EP 4 727 057 A1**

(12) **EUROPEAN PATENT APPLICATION**

(43) Date of publication:
**15.04.2026   Bulletin 2026/16**

(21) Application number: **24306667.7**

(22) Date of filing: **10.10.2024**

(51) International Patent Classification (IPC):
**H04L 9/30** $^{(2006.01)}$

(52) Cooperative Patent Classification (CPC):
**H04L 9/3093**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **THALES DIS FRANCE SAS
92190 Meudon (FR)**

(72) Inventor: **PATARIN, Jacques
78470 Saint-Rémy-lès-Chevreuse (FR)**

(74) Representative: **Bricks, Amélie
Thales Dis France SAS
Intellectual Property Department
6, rue de la Verrerie
92190 Meudon (FR)**

(54) **METHOD FOR SECURING MULTIVARIATE CRYPTOSYSTEMS FOR ENCRYPTION**

(57)     The present invention relates to a cryptographic method for reinforcing security of an initial encryption multivariate public key cryptosystem to generate a modified encryption multivariate public key cryptosystem, wherein said initial encryption multivariate public key cryptosystem comprises :

• a secret transformation which transforms a first input value A represented by a first input vector of n variables $a_1, ..., a_n$ in K, into a first output value B represented by a first output vector of m variables $b_1, ..., b_m$ in K through a set of m secret multivariate polynomials of degree t ($A_1(a_1, ...,a_n), ..., A_m(a_1, ..., a_n)$) over said finite field or ring K, and which is defined as ($A_1(a_1, ...,a_n), ..., A_m(a_1, ..., an)$) = ($b_1, ..., b_m$) corresponding to a secret system of m polynomial equations $A_j(a_1,...,a_n) = b_j$ for j an integer in {1 ,... ,m},

• a public transformation which transforms a second input value X represented by a second input vector of n variables $x_1, ..., x_n$ in K, into a second output value Y represented by a second output vector of m variables $y_1, ..., y_m$ in K through a set of m multivariate polynomials of degree t ($P_1(x_1, ... ,x_n), ..., P_m(x_1, ..., x_n)$) over K, with n and m integers, and which is defined as ($P_1(x_1, ... ,x_n), ..., P_m(x_1, ..., x_n)$) = ($y_1, ..., y_m$) corresponding to a public system of m polynomial equations $P_j(x_1,...,x_n) = y_j$ for j an integer in {1,... ,m},

• secret linear transformations S and T which verify X = S.A and Y = T.B and which are to be used to decrypt any ciphertext encrypted using said public transformation, wherein said modified encryption multivariate public key cryptosystem is generated by adding to said initial encryption multivariate public key cryptosystem an internal or external perturbation, wherein adding an internal, respectively external, perturbation comprises: determining (E1) t*r secret linear forms $L_1, ..., L_r, L'_1, ..., L'_r$ in said first input vector, and for j in {1,... ,m}, adding (E2) to equation j of said secret, respectively public, system of polynomial equations a linear combination of r products of t of said determined secret linear forms such that $b_j = A'_j$

$(a1,. . ,a_n)$ with $A'_j = A_j + \sum_{i=1}^{r} \alpha_{i,j} \prod_{k=1}^{t} L_i^k$ or

$$y_j = P'_j(x_1, \ldots, x_n)$$
with

$$P'_j = P_j + \sum_{i=1}^{r} \alpha_{i,j} \prod_{k=1}^{t} L_i^k \ .$$

**(Cont. next page)**

EP 4 727 057 A1

[Fig. 1]

E1 — Determining an integer r in {1,...,m} and t*r secret linear forms $L^1_1, ..., L^1_r, ..., L^t_1, ..., L^t_r$ in $a_1, ..., a_n$ or $x_1, ..., x_n$

E2 —
$y_j = P'_j(x_1,...,x_n)$ with $P'_j = P_j + \sum_{i=1}^{r} \alpha_{i,j} \prod_{k=1}^{t} L_i^k$ or

$b_j = A'_j(a_1,...,a_n)$ with $A'_j = A_j + \sum_{i=1}^{r} \alpha_{i,j} \prod_{k=1}^{t} L_i^k$

**Description**

**FIELD OF THE INVENTION**

The present invention relates to the field of cryptography, and more particularly to a method for securing encryption using a multivariate cryptosystem.

**BACKGROUND OF THE INVENTION**

Cryptographic algorithms are commonly used for ensuring the privacy of communications by encryption, for authentication or for generating a verifiable signature.

Two major categories of cryptography are secret key cryptography and private-key-public-key cryptography (herein, simply referred to as public key cryptography). In public key cryptography, the recipient of a ciphertext message, i.e., the decrypting party, has a private key or secret key required to decipher ciphertext messages encrypted with the public key. In other words, there is an association between a particular private key and a particular public key; they form a key pair. The public key is made available to anyone who wishes to send an encrypted message (a ciphertext message) or to securely exchange a key (by sending an encrypted version of it) whereas the corresponding secret key is kept secret by the intended recipient of messages.

The security of most of the public key schemes relies on the difficulty of solving one of the two problems that are currently considered to be hard, i.e., the problem of factoring large integers and the problem of computing discrete logarithms. However, the techniques for solving these two famous problems improve continually. In addition, the increasing computational power of quantum computers is a growing threat to the security of non-quantum cryptographic schemes, such as RSA or ECDSA. Such schemes will eventually become completely defenseless against attacks performed using powerful-enough quantum computers. Therefore, it becomes very important to find alternative cryptographic schemes based on different difficult problems.

One possibility for secure public key schemes is based on the problem of solving multivariate nonlinear equations over small finite fields. In multivariate cryptography, the public key is a set A of m polynomial equations in n variables over a small finite field K. Multivariate Cryptography is one of the main families of algorithms used to make post-quantum public key cryptography.

Public key schemes for encryption, signature or authentication can be built with such public keys. Nevertheless, most known multivariate encryption algorithms either have been broken by attacks using MinRank problem or Gröbner bases) or have low performances (such as vanilla HFE scheme presented in : Jacques Patarin. Hidden fields equations (HFE) and isomorphisms of polynomials (IP): Two new families of asymmetric algorithms. In Ueli M.Maurer, editor, EUROCRYPT'96, volume 1070 of LNCS, pages 33-48. Springer, Heidelberg, May 1996 or such as the scheme presented in Jean-Charles Faugère, Gilles macario Rat, Jacques Patarin, and Ludovic Perret. A new perturbation for multivariate public key schemes such as HFE and UOV. Cryptology ePrint Archive, Report 2022/203, 2022. https://eprint. iacr.org/2022/203, called hereafter Hat Plus) leading to implementation issues.

Therefore, there is a need for a multivariate encryption scheme resistant to known attacks against this family of encryption schemes and having significantly better performances that the more recent secure multivariate encryption schemes.

**SUMMARY OF THE INVENTION**

For this purpose and according to a first aspect, this invention therefore relates to a cryptographic method for reinforcing security of an initial encryption multivariate public key cryptosystem to generate a modified encryption multivariate public key cryptosystem,

wherein said initial encryption multivariate public key cryptosystem comprises:

- a secret transformation which transforms a first input value A represented by a first input vector of n variables $a_1, ..., a_n$ in a finite field or ring K, into a first output value B represented by a first output vector of m variables $b_1, ..., b_m$ in said finite field or ring K through a set of m secret multivariate polynomials of degree t $(A_1(a_1, ... , a_n), ..., A_m(a_1, ..., a_n))$ over said finite field or ring K, and which is defined as $(A_1(a_1, ..., a_n), ..., A_m(a_1, ..., a_n)) = (b_1, ..., b_m)$ corresponding to a secret system of m polynomial equations $A_j(a_1, ..., a_n) = b_j$ for j an integer in $\{1, ..., m\}$,
- a public transformation which transforms a second input value X represented by a second input vector of n variables $x_1, ..., x_n$ in a finite field or ring K, into a second output value Y represented by a second output vector of m variables $y_1, ..., y_m$ in said finite field or ring K through a set of m public multivariate polynomials of degree t $(P_1(x_1, ... , x_n), ..., P_m(x_1, ..., x_n))$ over K, with n and m integers, and which is defined as $(P_1(x_1, ..., x_n), ..., P_m(x_1, ..., x_n)) = (y_1, ..., y_m)$, corresponding to a public system of m polynomial equations $P_j(x_1, ..., x_n) = y_j$ for j an integer in $\{1, ... , m\}$,
- secret linear transformations S and T which verify X = S.A and Y = T.B and which are to be used to decrypt any ciphertext encrypted using said public transformation,

wherein said modified encryption multivariate public key cryptosystem is generated by adding to said initial encryption multivariate public key cryptosystem an internal or external perturbation,
wherein adding an internal perturbation comprises:

- determining an integer r in $\{1,...,m\}$ and t*r secret linear forms $L^1_1$, ..., $L^1_r$, ..., $L^t_1$, ..., $L^t_r$ in said first input vector,
- for j in $\{1,...,m\}$, adding to equation j of said secret system of polynomial equations a linear combination of r products of t of said determined secret linear forms such that $b_j = A'_j(a_1,...,a_n)$

with $A'_j = A_j + \sum_{i=1}^{r} \alpha_{i,j} \prod_{k=1}^{t} L_i^k$ ;

and wherein adding an external perturbation comprises:

- determining an integer r in $\{1,...,m\}$ and t*r secret linear forms $L^1_1$, ..., $L^1_r$, ..., $L^t_1$, ..., $L^t_r$ in said second input vector,
- for j in $\{1,...,m\}$, adding to equation j of said public system of polynomial equations a linear combination of r products of t of said determined secret linear forms such that $y_j = P'_j(x_1,...,x_n)$ with

$$P'_j = P_j + \sum_{i=1}^{r} \alpha_{i,j} \prod_{k=1}^{t} L_i^k .$$

The initial encryption multivariate public key cryptosystem may be among C*, HFE, IFS or Two-Faces. Said finite field or ring K may be among the field GF(2) or the field GF(3). The degree of the public multivariate polynomials may be equal to 2 or 3.

Adding such a perturbation in the system of equations of the cryptosystem enables to defeat known attacks against multivariate encryption schemes. At the same time, the added perturbation comprises only few non-zero terms on average which makes the ciphertexts still decryptable by the owner of the secret key of the cryptosystem.

According to a second aspect, this invention therefore relates also to a method of secure decryption of at least one ciphertext $(y_1, ..., y_m)$ of a message $(x_1,..., x_n)$ encrypted with the public transformation of a modified encryption multivariate public key cryptosystem generated by the method according to the first aspect,
said method being performed by a decryption device comprising a processing system, an interface and a memory configured for storing said secret linear transformations S and T and comprising the steps of:

- receiving, on said interface, said at least one ciphertext from an encryption device,
- for e from 0 to r, e being an hypothetical integer number of non-zero products of linear forms added to each equation of said public or secret system of polynomial equations: performing, by said processing system, decryption attempts of said at least one ciphertext to generate a cleartext using said stored secret linear transformations S and T for all possible selections of e non-zero products of linear forms among said r products of linear forms added to each equation,
- outputting, on said interface, as a result of decryption of said at least one ciphertext an output result equal to a cleartext generated by a successful decryption attempt.

Since the number of non-zero terms in the perturbation added to the equations of the system is limited, the owner of the secret key of the cryptosystem will still be able to decrypt any cipher generated with the corresponding public key using a try and check approach, at a lower cost than in existing state-of-the-Art multivariate encryption schemes.

In a first embodiment, the method according to the second aspect may comprise stopping decryption attempts when a decryption attempt is successful. Alternatively, in a second embodiment, the method according to the second aspect may comprise performing a predetermined number of decryption attempts before outputting said result of said decryption. Performing a number of decryption attempts which does not depend on the result of already performed attempts enables to hide to an attacker monitoring the system which ciphertexts have been successfully deciphered.

According to an embodiment wherein receiving at least one ciphertext comprises receiving a plurality of ciphertexts of messages encrypted with the public transformation of said modified encryption multivariate public key cryptosystem, the step of performing decryption attempts of said ciphertexts for a given value of said hypothetical integer number e may comprise performing decryption attempts of all ciphertexts for all possible selections of e non-zero products of linear forms before performing decryption attempts for the next value of said hypothetical integer number e.

By doing so, the decryption process limits the number of decryption attempts by first checking if any received ciphertext was generated with a low number of non-zero products of linear forms added to the equations of the cryptosystem, before trying decryption attempts assuming a higher number of non-zero terms added to the equations of the cryptosystem.

According to another embodiment wherein receiving at least one ciphertext comprises receiving a plurality of ciphertexts of messages encrypted with the public transformation of said modified encryption multivariate public key cryptosystem, the step of performing decryption attempts may comprise performing said decryption attempts for all received ciphertexts in parallel.

Processing many ciphertexts in parallel enables to maximize the chances of successfully decrypting as soon as possible a ciphertext that would have been generated with a low number of non-zero terms added to the equations of the cryptosystem.

According to an embodiment, said plurality of messages encrypted with the public transformation of said modified encryption multivariate public key cryptosystem may be different session keys; and said method according to the second aspect may comprise transmitting to the encryption device an indication of which session key has been successfully decrypted, possibly with a signature of said indication, generated using a secret key of a public key signature algorithm.

By doing so, the encryption device and the decryption device may securely share a session key by protecting it using the modified encryption multivariate public key cryptosystem.

According to another embodiment, said plurality of messages encrypted with the public transformation of said modified encryption multivariate public key cryptosystem may be transformed values of a unique cleartext, all said transformed values being generated by transforming said unique cleartext using a publicly available transformation, parameters of said publicly available transformation being shared between said encryption device and said decryption device; and said method according to the second aspect may comprise undoing said publicly available transformation on said output result which has been output as result of decryption using the appropriate shared parameters.

As an example, said publicly available transformation may be a symmetric encryption algorithm; all said transformed values may be generated by encrypting with a different symmetric key said unique cleartext using said symmetric encryption algorithm, said keys being shared between said encryption device and said decryption device; and said method according to the second aspect may comprise deciphering said output result which has been output as result of decryption using the appropriate shared key.

By doing so, the encryption device is able to send to the decryption device many ciphertexts corresponding to the same cleartext message, thereby increasing the probability that a ciphertext has been generated with a low number of non-zero terms added to the equations of the cryptosystem without increasing the capability of an attacker to break the cryptosystem.

According to a third aspect, this invention therefore relates also to a computer program product directly loadable into the memory of at least one computer, comprising software code instructions for performing the steps of the methods according to the second aspect when said product is run on the computer.

According to a fourth aspect, this invention therefore relates also to decryption device for securing decryption of at least one ciphertext $(y_1, ..., y_m)$ of a message $(x_1,..., x_n)$ encrypted with the public transformation of a modified encryption multivariate public key cryptosystem generated by the method according to the first aspect, said decryption device comprising a processing system, an interface and a memory wherein :

- said memory stores said secret linear transformations S and T,
- said interface receives said at least one ciphertext from an encryption device,
- for e from 0 to r, e being an hypothetical number of non-zero products of linear forms added to each equation of said public or secret system of polynomial equations: said processing system performs decryption attempts of said at least one ciphertext to generate a cleartext using said stored secret linear transformations S and T for all possible selections of e non-zero products of linear forms among said r products of linear forms added to each equation,
- said interface outputs as a result of decryption of said at least one ciphertext an output result equal to the first cleartext generated by a successful decryption attempt.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 illustrates schematically a cryptographic method for reinforcing security of an initial encryption multivariate public key cryptosystem to generate a modified encryption multivariate public key cryptosystem according to an embodiment of the present invention;
- Figure 2 is a schematic illustration of system according to an embodiment of the present invention;
- Figure 3 is a schematic illustration of a decryption device according to an embodiment of the present invention;
- Figure 4 illustrates schematically a method of secure decryption of at least one ciphertext $(y_1, ..., y_m)$ of a message $(x_1,..., x_n)$ encrypted with the public transformation of a modified encryption multivariate public key cryptosystem generated according to the method described on figure 1 according to an embodiment of the present invention;
- Figure 5 schematically illustrates performances of the modified encryption multivariate public key cryptosystem for different security levels.

## DETAILED DESCRIPTION OF EMBODIMENTS OF THE INVENTION

The invention aims at reinforcing the security of an initial existing encryption multivariate public key cryptosystem such as C* (Matsumoto, T., Imai, H. (1988). Public Quadratic Polynomial-Tuples for Efficient Signature-Verification and Message-Encryption. *In:* Barstow, D., et al. Advances in Cryptology - EUROCRYPT '88. EUROCRYPT 1988. Lecture Notes in Computer Science, vol 330. Springer, Berlin, Heidelberg)*, or HFE cited above as well as Two-Faces (*presented in* Gilles Macario-Rat, Jacques Patarin, Two-Faces: New Public Key Multivariate Schemes, AFRICACRYPT 2018, pp.252-265, LNCS n° 10831, pp.252-265*) and IFS (Billet, O., Patarin, J., & Seurin, Y. (2009). Analysis of Intermediate Field Systems. IACR Cryptol. ePrint Arch., 2009, 542.), to generate a modified encryption multivariate public key cryptosystem which will be resistant to modern attacks successfully targeting such existing encryption multivariate public key cryptosystems such as attacks using MinRank problem or Gröbner bases.

Such an initial encryption multivariate public key cryptosystem may be defined by a public transformation, a secret transformation and two secret linear transformations S and T.

The secret transformation transforms a first input value A represented by a first input vector of n variables $(a_1, ..., a_n)$ in a finite field or ring K, into a first output value B represented by a first output vector of m variables $(b_1, ..., b_m)$ in said finite field or ring K through a set of m secret multivariate polynomials of degree t $(A_1(a_1, ...,a_n), ..., A_m(a_1, ..., a_n))$ over said finite field or ring K. Therefore, this secret transformation is defined as $(A_1(a_1, ... ,a_n), ..., A_m(a_1, ..., an)) = (b_1, ..., b_m)$. It can be written as a secret system of m polynomial equations $A_j(a_1,...,a_n)=b_j$ for j an integer in {1,...,m}.

$$\left\{ \begin{array}{l} b_1 = A_1(a_1, \ldots a_n) \\ \ldots \\ b_m = A_m(a_1, \ldots a_n) \end{array} \right.$$

m may be equal to n or on the order of n. The finite field or ring K may be among the field GF(2) or the field GF(3). It may be any other very small field but the encryption scheme will become less efficient as the field size grows.

Once the secret transform is obtained, this structure is hidden from the public by applying a change of variables to obtain the public transformation defining a public key. This is done by means of the two linear secret transformations S and T which, applied to the first input value A and the first output value B define a second input value X and a second output value Y such that X = S.A and Y = T.B.

The two linear secret transformations S and T, together with the polynomials A1, ..., Am of the secret transformation, make up the secret key that will be used for decrypting any ciphertext encrypted using said public key.

The public transformation thus transforms the second input value X represented by a second input vector of n variables $(x_1, ..., x_n)$ in said finite field or ring K, into the second output value Y represented by a second output vector of m variables $(y_1, ..., y_m)$ in said finite field or ring K through a set of m public multivariate polynomials of degree t $(P_1(x_1, ... ,x_n), ..., P_m(x_1, ..., x_n))$ over K, with n and m integers. Therefore this public transformation is defined as $(P_1(x_1, ... ,x_n), ..., P_m(x_1, ..., x_n)) = (y_1, ..., y_m)$. It can be written as a public system of m polynomial equations $P_j(x_1,...,x_n) = y_j$ for j an integer in {1,...,m},

$$\left\{ \begin{array}{l} y_1 = P_1(x_1, \ldots x_n) \\ \ldots \\ y_m = P_m(x_1, \ldots x_n) \end{array} \right.$$

The public multivariate polynomials may have a degree t equal to 2 or 3. The polynomials $P_1, ... P_m$ of this public transformation are the public key of the initial encryption multivariate public key cryptosystem. The public key can be used by an encryption party to encrypt a message M = $(m_1, ..., m_n)$ into a ciphertext C = $(c_1, ..., c_m)$, such that $(c_1, ..., c_m) = (P_1(m_1, ...,m_n), ..., P_m(m_1, ..., m_n))$.

To generate a modified encryption multivariate public key cryptosystem which is protected against attacks using MinRank problem or Gröbner bases, a first idea is to add to one of the equation systems presented above a perturbation making decryption fail most of the time even when owning the secret key. By doing so, an attacker performing an attack which is usually efficient against an already existing multivariate encryption scheme will not get the expected cleartext corresponding to an attacked ciphertexts.

In order to make decryption still possible at a limited cost for the rightful owner of the secret key, the added perturbation shall not be too strong: it shall add only a limited number of non-zero terms to the perturbated system of equation. In addition, a third idea of the invention is to enable the rightful owner of the secret key to perform decryption at a limited cost using a guess-and-check approach, based on assumptions on the perturbation amount and on the exact equation to which it has been added.

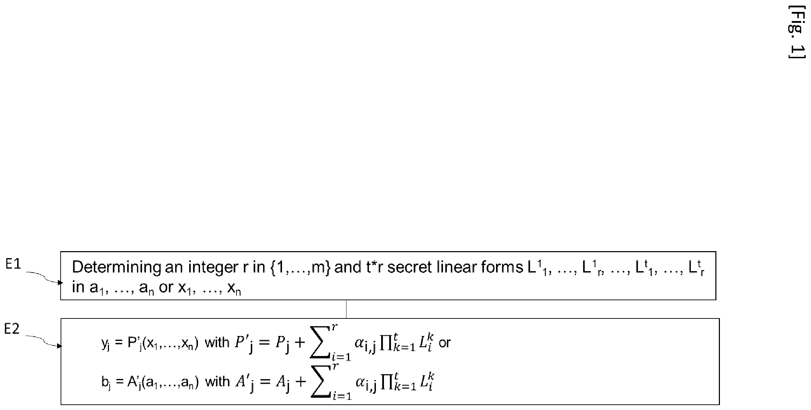

To this end, according to a first aspect of the invention, a modified encryption multivariate public key cryptosystem is generated by adding to said initial encryption multivariate public key cryptosystem an internal or external perturbation as illustrated on **Figure 1**. Both types of perturbations have the same performance. From a cryptanalytic point of view, internal and external perturbations are equivalent.

More precisely, an internal perturbation may be added by:

- determining, in a first step E1, an integer r in {1,...,m} and t*r secret linear forms in said first input vector $L^1_1$ $(a_1, ..., a_n)$, ..., $L^1_r(a_1, ..., a_n)$, ..., $L^t_1(a_1, ..., a_n)$, ..., $L^t_r$ $(a_1, ..., a_n)$,
- in a second step E2, for j in {1, ... ,m}, adding to equation j of said secret system of polynomial equations a linear combination of r products of t of said determined secret linear forms

By doing so, in each equation of the secret system of polynomial equations, r terms are added which each include one of the r possible products $\prod_{k=1}^{t} L_i^k$, which leads to the equations $b_j = A'_j(a_1,...,a_n)$ with

$$A'_j = A_j + \sum_{i=1}^{r} \alpha_{i,j} \prod_{k=1}^{t} L_i^k$$ . In the case where t = 2, $A'_j = A_j + \sum_{i=1}^{r} \alpha_{i,j} L_i L'_i$ .

And, an external perturbation may be added by:

- determining, in a first step E1, an integer r in {1,... ,m} and t*r secret linear forms in said second input vector $L^1_1(x_1, ... ,x_n)$, ..., $L^1_r$ $(x_1, ... ,x_n)$, ..., $L^t_1(x_1, ...,x_n)$, ..., $L^t_r(x_1, ...,x_n)$,
- in a second step E2, for j in {1,... ,m}, adding to equation j of said public system of polynomial equations a linear combination of r products of t of said determined secret linear forms.

By doing so, in each equation of the public system of polynomial equations, r terms are added which each include one of the r possible products $\prod_{k=1}^{t} L_i^k$, which leads to the equations $y_j = P'_j(x_1,...,x_n)$ with

$$P'_j = P_j + \sum_{i=1}^{r} \alpha_{i,j} \prod_{k=1}^{t} L_i^k$$ . In the case where t=2, $P'_j = P_j + \sum_{i=1}^{r} \alpha_{i,j} L_i L'_i$ .

As a result of adding one of these two perturbations, each product term $\prod_{k=1}^{t} L_i^k$ with i in {1, ..., r} is added to each of the equations of the secret, respectively public, system of polynomial equations. Some of the coefficients $\alpha_{i,j}$ may be null, thereby decreasing the number of potential non-zero products in the equations. As an example, for each value of j (i.e. each equation of the cryptosystem), only one coefficient $\alpha_{i,j}$ is non-zero among the r coefficients of the linear combination $\sum_{i=1}^{r} \alpha_{i,j} L_i L'_i$ and only one product $L_i.L'_i$ is added to the equation.

The number r of products of t secret linear forms $\prod_{k=1}^{t} L_i^k$ added to each equation of the cryptosystem may be chosen depending on a desired security level $\lambda$ to be achieved for which the minimum number of attacks an attacker must perform to break the cryptosystem is at least $2^\lambda$, based on current known attacks. As an example, for a security level of 80 bits r may be taken equal to 12, for a security level of 128 bits r may be taken equal to 24, for a security level of 192 bits r may be taken equal to 40 and for a security level of 256 bits r may be taken equal to 56.

In the rest of the description, the methods according to the invention are described in the case where t = 2 and the r products of t secret linear forms $\prod_{k=1}^{t} L_i^k$ are identified as $L_i.L'_i$. These methods can be easily transposed and are applicable to any higher value of t such as t = 3 or t = 4.

Thus, when the perturbation is internal: the public key generated for this modified encryption multivariate public key cryptosystem is P'$_1$,... P'$_m$ ; and the secret key generated for this modified encryption multivariate public key cryptosystem comprises two linear secret transformations S, T, the polynomials A'$_1$,... A'$_m$, the coefficients $\alpha_{i,1}$,... $\alpha_{i,m}$, the determined secret linear forms $L_i$, $L'_i$ and their products $L_i.L'_i$.

And when the perturbation is external: the public key corresponding to this modified encryption multivariate public key cryptosystem is P'$_1$,... P'$_m$ ; and the secret key corresponding to this modified encryption multivariate public key cryptosystem gathers the two linear secret transformations S, T, the polynomials A$_1$,... A$_m$, the coefficients $\alpha_{i,1}$,... $\alpha_{i,m}$, the determined secret linear forms $L_i$, $L'_i$ and their products $L_i.L'_i$.

Alternatively, the coefficients $\alpha_{i,1}$,... $\alpha_{i,m}$ may be public.

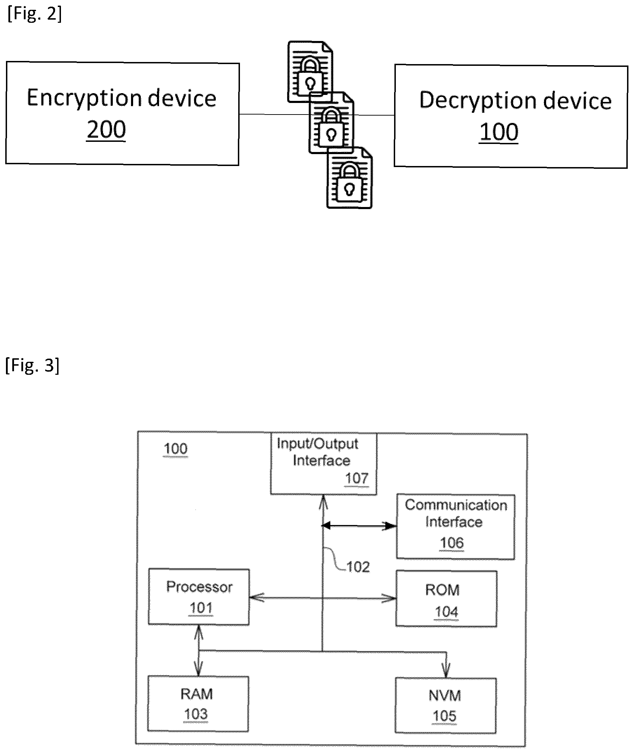

**Figure 2** is a schematic illustration of a system connecting a cryptographic device 200 called encryption device, to a cryptographic device 100 called decryption device.

The encryption device 200 is configured for encrypting messages with the public key corresponding to the modified encryption multivariate public key cryptosystem and sending said encrypted messages to the decryption device 100 which is configured for decrypting said received messages using the secret key corresponding to the modified encryption multivariate public key cryptosystem.

A schematic illustration of said decryption device is given on **Figure 3.** This electronic device 100 may include a processor 101 connected via a bus 102 to a random-access memory (RAM) 103, a read-only memory (ROM) 104, and/or a nonvolatile memory (NVM) 105.

The decryption device 100 may further include a communication interface 106 by which the decryption device 100 may be connected to a network. Such an interface may be a wireless interface connected to an antenna and may be used to connect the decryption device 100 to various forms of wireless networks, e.g., wide-area networks, WiFi networks, or mobile telephony networks. Alternatively, such an interface may be a wired interface such as an Ethernet internet. The decryption device 100 may also include input/output means 107 providing interfaces to the user of the decryption device 100, such as one or more screens, loudspeakers, a mouse, tactile surfaces, a keyboard etc... The encryption device may have a similar structure and may comprise the same kind of components.

Such a decryption device may for example be a smartcard, a mobile telephone, a tablet, or a personal computer. It may also be a smartchip embedded in an identity document such as a passport, or a Hardware Security Module (HSM).

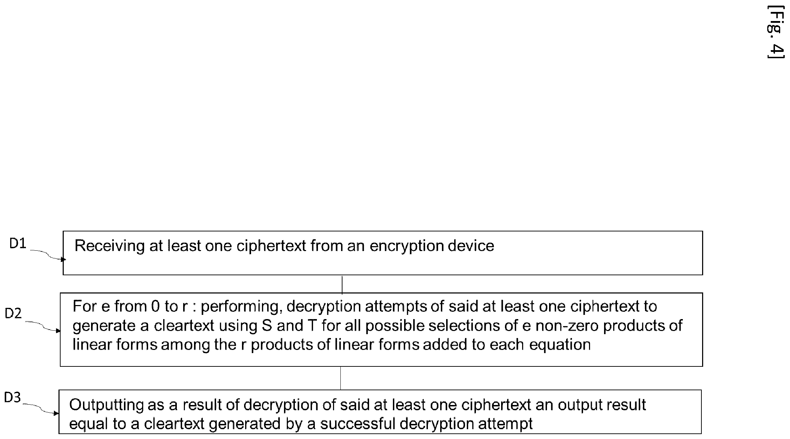

The following paragraphs describe the steps of a **method of secure decryption** of a ciphertext performed by the decryption device according to a second aspect of the invention as depicted on **figure 4.**

In the rest of the decryption, the decryption method will be described in the case of adding an external perturbation as defined above. The exact same method is also applicable to the internal perturbation case since any equation of the public system of m polynomial equations $P'_j(x_1,...,x_n) = y_j$ may be translated into the corresponding equation of the secret system of m polynomial equations $A_j(a_1,...,a_n) = b_j$ using the secret linear transformations S and T.

To properly decrypt a ciphertext, the decryption device has to take into account the value of the applied perturbation in its decryption process.

Since the values taken by the linear forms added to the equations of the cryptosystem $L_1$ $(x_1, ... ,x_n)$, ..., $L_r(x_1, ... ,x_n)$, $L'_1(x_1, ... ,x_n)$, ... , $L'_r$ $(x_1, ... ,x_n)$ are unknown to the decryption device, what makes decryption possible is the fact that, the linear forms being defined on GF(2) or GF(3) most products $L_i(x_1, ...,x_n)L'_i(x_1, ...,x_n)$ will be equal to zero. As an example, on GF(2) the probability that any product $L_iL'_i$ is different from 0 is equal to ¼. On GF(3) it is equal to 4/9.

Therefore, in order to decrypt a ciphertext, it is possible to make assumptions on the number of non-zero products $L_iL'_i$ among the r products $L_1L'_1$, ..., $L_rL'_r$ added in each equation of the cryptosystem when the ciphertext has been generated (which will be r/4 in average), to make further assumptions on which of the r products $L_1L'_1$, ..., $L_rL'_r$ were non-zero values (and on these values in the case of GF(3)) and therefore on what was the value of the linear combination $\displaystyle\sum_{i=1}^{r} \alpha_{i,j} L_i L'_i$ of these r products which was added to each of the equation of the cryptosystem.

It is then possible to test such assumptions by correcting each element of the ciphertext of the corresponding assumed perturbation value

$$\sum_{i=1}^{r} \alpha_{i,j} L_i L'_i$$ and then performing a decryption attempt using the secret linear transformations S and T as would be done in the case of the initial multivariate public key cryptosystem.

In a first decryption step D1, the decryption device receives, on its interface, a ciphertext from the encryption device.

Let e be an hypothetical integer number of non-zero products of linear forms added to each equation of said public or secret system of polynomial equations. In a second decryption step D2, where e is incremented from 0 to r, the processing system of the decryption device performs decryption attempts of said at least one ciphertext to generate a cleartext using said stored secret linear transformations S and T for all possible selections of e non-zero products of linear forms among said r products of linear forms added to each equation.

For example, in the case of GF(2), when r = 4 and the degree of the public equations equals to 2, a secret linear combination of products $L_1L'_1$, $L_2L'_2$, $L_3L'_3$, $L_4L'_4$ has been added to each equation of said secret or public system.

The decryption device may first suppose that all products are equal to zero, i.e. e = 0, which has in the GF(2) case a probability of $(3/4)^4$ = 31.6% and try to solve the system of equations as it is.

It may then assume that only one product has a non-zero value, i.e. e = 1, which has in the GF(2) case a probability of $(3/4)^3$ = 42.2%, compute 4 different corrections of each equation of the system depending on which product $L_iL'_i$ has a non-zero value and try to solve the system of equations in each of these cases.

The decryption device may then similarly make the assumption that e = 2 and make decryption attempts for all twelve combinaisons of 2 non-zero products $L_iL'_i$ among the four products $L_1L'_1$, $L_2L'_2$, $L_3L'_3$, $L_4L'_4$.

The decryption device may then similarly make the assumption that e = 3 and make decryption attempts for the four possible cases depending on which product $L_iL'_i$ among the four products $L_1L'_1$, $L_2L'_2$, $L_3L'_3$, $L_4L'_4$ is supposed to be equal to zero.

And finally, it may make the assumption that e = 4 and make a decryption attempt assuming that all products $L_iL'_i$ are equal to one.

In a third decryption step D3, the decryption device outputs, on its interface, as a result of decryption of said at least one ciphertext an output result equal to a cleartext generated by a successful decryption attempt.

The decryption device may stop performing decryption attempts when a decryption attempt is successful. It enables to provide as output the decrypted message as soon as it is available. Nevertheless, doing so may be a security issue. Indeed, an attacker monitoring the activity of the decryption device may gain knowledge about which decryption attempt has been successful and therefore gain information about the ciphertext, such as the actual number of non-zero products $L_iL'_i$.

Alternatively, the decryption device is configured to perform a predetermined number of decryption attempts before outputting as result of said decryption a cleartext obtain by a successful decryption attempt. In this embodiment, after a decryption attempt was successful, the decryption device keeps performing additional decryption attempts until the predetermined number of decryption attempts have been performed. Doing so enables to hide to an attacker which one, or which ones, of the decryption attempts was successful.

A drawback of the decryption method described above is that the number of decryption attempts to be performed before one is successful may be very large. Indeed the number of decryption attempts required to test all possible perturbations for a given value of e is at least equal to the number of combinations of e elements among r : $\binom{r}{e} = \frac{r!}{e!(r-e)!}$ . And in the GF(2) case, the number of non-zero products $L_iL'_i$ in each equation is on average equal to r/4. As an example, in the GF(2) case, for r = 24 and e = 6 , the number of combinations of e elements among r would amount to 134596 decryption attempts; and for r = 56 and e = 14, to no less than $10^{12}$ decryption attempts !

Therefore, to shorten the decryption time, another idea of the present invention is to take advantage of the fact that some ciphertexts may be generated with a very low number of non-zero products $L_iL'_i$, even sometimes without any perturbation (all products $L_iL'_i$ being equal to zero).

The modified encryption multivariate public key cryptosystem may be used for transmitting, from the encryption device to the decryption device, either a given cleartext whose value is meaningful, or a random value which shall remain secret but whose exact value is meaningless, such as a session key. Therefore, instead of keeping performing decryption attempts on a single ciphertext until a decryption attempt is successful, which may be very lengthy, the idea of this alternative embodiment is to get several different ciphertexts, either by encrypting different session keys, or by encrypting transformed values obtained by applying different public transformations to the same cleartext, among which we seek only to successfully decrypt one, and to perform decryption attempts on these several ciphertexts, in the hope that one of these ciphertexts was generated with a low number of non-zero and will be decrypted after only a small number of decryption attempts. As an example, in the case of GF(2) and r = 12, the probability that a given ciphertext was generated with all products $L_iL'_i$ being equal to zero is (3/4)^12 = 3.16%. As a result, for a high enough number of ciphertexts there is a probability close to one that among these ciphertexts, at least one has been generated with all products $L_iL'_i$ being equal to zero. As an example, among 100 messages, this probability reaches 1-[1-(3/4)^12]^100 = 96%.

The decryption device may for example, at the first decryption step D1, receive a plurality of ciphertexts of messages encrypted with the public transformation of the modified encryption multivariate public key cryptosystem and then, at the second decryption step D2, perform decryption attempts for all the received ciphertexts in parallel.

Alternatively, the decrypting device may, at the second decryption step D2, test all these ciphertexts for low values of the hypothetical integer number e of non-zero products $L_iL'_i$ before testing higher values of e for these ciphertexts. More precisely, when the decryption device performs decryption attempts of these ciphertexts for a given value of the hypothetical integer number e, it may perform decryption attempts of all the ciphertexts for all possible selections of e non-zero products of linear forms among the r products $L_iL'_i$ (and all possible non-zero values taken by these if they are not defined on GF(2)) before performing decryption attempts on any of these ciphertexts for the next value of the hypothetical integer number e.

As an example, in the case the decryption device has received 5 ciphertexts, it would first try to decrypt all the 5 ciphertexts assuming that all the r products $L_iL'_i$ are equal to zero i.e. e = 0. It may then try to decrypt all the ciphertexts assuming that only one product has a non-zero value, i.e. e = 1. And then try to decrypt all the ciphertexts assuming e = 2 etc...

As described above in the case of a decryption of a single message, the decryption device may stop performing decryption attempts when a decryption attempt of any of the ciphertexts is successful. Alternatively, the decryption device may be configured to perform a predetermined number of decryption attempts on each of the ciphertexts, for example up to a given value of the hypothetical integer number e, before outputting as result of said decryption a cleartext obtain by any successful decryption attempt of one of the ciphertexts.

When after a predetermined number of decryption attempts of all the ciphertexts no decryption attempt has been successful, for example for all values of the hypothetical integer number e from 0 to a predetermined threshold $e_{max}$, it means that none of these ciphertexts has been generated with a number of non-zero products $L_iL'_i$ lower than $e_{max}$ or equal to it. In such a case, the decryption device may, instead of performing more decryption attempts on these ciphertexts for values of the hypothetical integer number e higher than $e_{max}$, request new ciphertexts to the encrypting device and perform new decryption attempts, starting from e = 0, on these new ciphertexts.

In an embodiment, the decryption device may even be configured to request additional ciphertexts from the encryption device and to keep applying to them the decryption method described above, even after a decryption attempt has been successful, until a predetermined number of ciphertexts has been processed. In addition, the predetermined number of ciphertexts to be processed may be regularly redefined, for example at random, possibly for each new message to be transmitted.

In an embodiment, the encryption device and the decryption device want to share a session key. In such a case, the encryption device may encrypt a plurality of session keys with the same public transformation of the modified encryption multivariate public key cryptosystem and transmit the corresponding ciphertexts to the decryption device. The decryption device may then try to decrypt these ciphertexts by performing the decryption method described above. After this method has output as a result of decryption of the ciphertexts an output result equal to a cleartext generated by a successful decryption attempt of one of these ciphertexts, the decryption device may transmit to the encryption device an indication of which session key has been successfully decrypted. In addition, it may transmit a signature, generated using the secret key of a public key signature algorithm, of this indication of which session key has been decrypted. Alternatively, it may also use encrypt a test message, known to the encryption device, or compute a hash of the session key and send the ciphertext or hash to the encryption device, which will enable the encryption device to find out which key is going to be used by the decryption device as shared session key. Both devices can then use this decrypted session key as a shared session key.

In another embodiment, the encryption device wants to securely transfer a specific meaningful message to the decryption device. In such a case, the encryption device may:

- generate from this unique cleartext message a plurality of transformed values of this cleartext by applying to it a public transformation (called hereafter: publicly available transformation), for example by encrypting it using a single symmetric encryption algorithm, such as AES, with different keys,

- share the parameters of the publicly available transformation used to generate each transformed value, for example by sharing with the decryption device these AES keys, which therefore may be public,

- encrypt each of these transformed values with the public transformation of the modified encryption multivariate public key cryptosystem, producing encrypted ciphertexts,

- transmit these encrypted ciphertexts to the decryption device.

By doing so, the encryption device may generate at will as many ciphertexts as needed, all corresponding to the same cleartext. Each of these ciphertext has a (small) probability of being generated with a number of non-zero products $L_iL'_i$ lower than $e_{max}$.

In this embodiment, the decrypting device may then try to decrypt these ciphertexts by performing the decryption method described above. After at least one decryption attempt of one of these ciphertexts has been successful, the result of this successful decryption attempt output as an output result is one of the transformed values described above. The decryption device should then undo the publicly available transformation which generated this transformed value to recover the corresponding initial cleartext. As an example, when this publicly available transformation is an AES encryption using AES public keys, the decryption device may decipher this output result using the appropriate shared key which has been used in the first place by the encryption device to generate it from the cleartext.

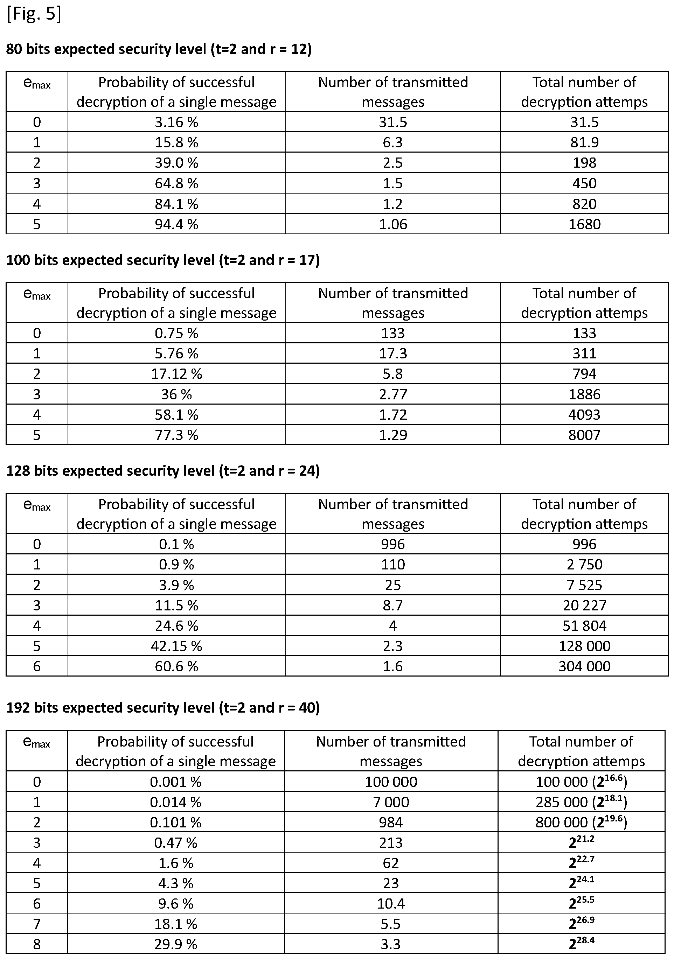

The performances of such a decryption algorithm are displayed in the tables of Figure 5, in the case of GF(2), for different values of r (= 12, 17, 24 and 40). Each of these tables shows, depending on the maximum tested value $e_{max}$ of the hypothetical integer number e, the probability for a single ciphertext to be successfully deciphered by the decryption method described above when performing decryption attempts from e = 0 to e = $e_{max}$, assuming that, for each tested value of e, a decryption attempt is performed for each possible selection of e non-zero products $L_iL'_i$ among the r products $L_iL'_i$. These tables also give for each value of $e_{max}$, the number of decryption attempts to be performed for testing up to $e_{max}$ an arbitrary number of messages which ensures a probability of successful decryption of at least one of these messages above nearly 60%.

The values in these tables may be compared to the required number of decryption attempts to test all possible values of the added perturbation in the case of Hat Plus cryptosystem, which amounts to $2^r$ (Jean-Charles Faugère, Gilles macario Rat, Jacques Patarin, and Ludovic Perret. A new perturbation for multivariate public key schemes such as HFE and UOV. Cryptology ePrint Archive, Report 2022/203, 2022. https://eprint.iacr.org/2022/203).

When r = 12, transmitting just 32 ciphertexts and decrypting them with $e_{max} = 0$ (i.e. just performing one decryption attempt on each ciphertext assuming e = 0) enables to decrypt one of them with a 64% probability after only 32 decryption attempts whereas the required number of decryption attempts to test all possible values of the added perturbation in the case of Hat Plus cryptosystem amounts to $2^{12} = 4096$, which is almost 130 times bigger.

When r = 17, transmitting just 133 ciphertexts and decrypting them with $e_{max} = 0$ (i.e. just performing one decryption attempt on each ciphertext assuming e = 0) enables to decrypt one of them with a 63% probability after only 133 decryption attempts whereas the required number of decryption attempts to test all possible values of the added perturbation in the case of Hat Plus cryptosystem amounts to $2^{17} = 131072$, which is almost 420 times bigger.

When r = 24, transmitting just 996 ciphertexts and decrypting them with $e_{max}$ = 0 (i.e. just performing one decryption attempt on each ciphertext assuming e = 0) would enables to decrypt one of them with a 63% probability after 996 decryption attempts. Generating and transmitting 996 ciphertexts may be costly. Therefore, in this case a tradeoff can be found by increasing the value of $e_{max}$ and lowering the number of transmitted ciphertexts. Transmitting just 25 ciphertexts and decrypting them with $e_{max}$ = 2 (i.e. performing one decryption attempt on each ciphertext assuming e = 0 and then performing decryption attempts on each ciphertext for each possible selection of e non-zero products $L_iL'_i$ among the r products $L_iL'_i$ assuming e = 1, and then e = 2) would enables to decrypt one of them with a 63% probability after 7525 decryption attempts, whereas the required number of decryption attempts to test all possible values of the added perturbation in the case of Hat Plus cryptosystem amounts to $2^{24}$ = about 16 millions, which is almost 2200 times bigger.

For higher values of r, a tradeoff should similarly be decided between the number of ciphertexts to be transmitted and the number of decryption attempts to be performed. As an example, in the case of r = 40, transmitting 7000 ciphertexts and decrypting them with $e_{max}$ = 1 (i.e. performing one decryption attempt on each ciphertext assuming e = 0, and then performing decryption attempts on each ciphertext for each possible selection of e non-zero products $L_iL'_i$ among the r products $L_iL'_i$ assuming e = 1) would enable to decrypt one of them with a 62% probability after 285 000 decryption attempts, whereas the required number of decryption attempts to test all possible values of the added perturbation in the case of Hat Plus cryptosystem amounts to $2^{40}$, which is almost 4 millions times bigger.

As a result, the method described above enables to provide a multivariate encryption scheme which is resistant to known attacks against this family of encryption schemes thanks to the perturbation added to the system of equations characterizing the public transformation or the secret transformation of the cryptosystem. At the same time, this new multivariate encryption scheme exhibits decryption performances which are far above that of state-of-the-Art multivariate encryption schemes such as Hat Plus.

**Claims**

1. A cryptographic method for reinforcing security of an initial encryption multivariate public key cryptosystem to generate a modified encryption multivariate public key cryptosystem,

   wherein said initial encryption multivariate public key cryptosystem comprises :

• a secret transformation which transforms a first input value A represented by a first input vector of n variables $a_1$, ..., $a_n$ in a finite field or ring K, into a first output value B represented by a first output vector of m variables $b_1$, ..., $b_m$ in said finite field or ring K through a set of m secret multivariate polynomials of degree t ($A_1(a_1, ...,a_n)$, ..., $A_m(a_1, ..., a_n)$) over said finite field or ring K, and which is defined as ($A_1(a_1, ..., a_n)$, ..., $A_m(a_1, ..., an)$) = ($b_1$, ..., $b_m$), corresponding to a secret system of m polynomial equations $A_j$ ($a_1,...,a_n$) = $b_j$ for j an integer in {1,...,m},
• a public transformation which transforms a second input value X represented by a second input vector of n variables $x_1$, ..., $x_n$ in a finite field or ring K, into a second output value Y represented by a second output vector of m variables $y_1$, ..., $y_m$ in said finite field or ring K through a set of m public multivariate polynomials of degree t ($P_1(x_1, ... ,x_n)$, ..., $P_m(x_1, ..., x_n)$) over K, with n and m integers, and which is defined as ($P_1(x_1, ... ,x_n)$, ..., $P_m(x_1, ..., x_n)$) = ($y_1$, ..., $y_m$), corresponding to a public system of m polynomial equations $P_j(x_1,...,x_n)$ = $y_j$ for j an integer in {1,... ,m},
• secret linear transformations S and T which verify X = S.A and Y = T.B and which are to be used to decrypt any ciphertext encrypted using said public transformation,

wherein said modified encryption multivariate public key cryptosystem is generated by adding to said initial encryption multivariate public key cryptosystem an internal or external perturbation,
wherein adding an internal perturbation comprises:

• determining (E1) an integer r in {1,... ,m} and t*r secret linear forms $L^1_1$, ..., $L^1_r$, ..., $L^t_1$, ..., $L^t_r$ in said first input vector,
• for j in {1,...,m}, adding (E2) to equation j of said secret system of polynomial equations a linear combination of r products of t of said determined secret linear forms such that $b_j$ = $A'_j(a_1,...,a_n)$ with $A'_j$ = $A_j$ +

$$\sum_{i=1}^{r} \alpha_{i,j} \prod_{k=1}^{t} L_i^k \; ;$$

and wherein adding an external perturbation comprises :

• determining (E1) an integer r in {1,... ,m} and t*r secret linear forms $L^1_1$, ..., $L^1_r$, ..., $L^t_1$, ..., $L^t_r$ in said second input vector,

- for j in {1,...,m}, adding (E2) to equation j of said public system of polynomial equations a linear combination of r products of t of said determined secret linear forms such that $y_j = P'_j(x_1,...,x_n)$ with $P'_j = P_j +$

$$\sum_{i=1}^{r} \alpha_{i,j} \prod_{k=1}^{t} L_i^k .$$

2. The method of claim 1, wherein said initial encryption multivariate public key cryptosystem is among C*, HFE, IFS or Two-Faces.

3. The method of claim 1 or 2, wherein said finite field or ring K is among the field GF(2) or the field GF(3).

4. The method of any one of claims 1 to 3, wherein the degree t of the public multivariate polynomials is equal to 2 or 3.

5. A method of secure decryption of at least one ciphertext $(y_1, ..., y_m)$ of a message $(x_1,..., x_n)$ encrypted with the public transformation of a modified encryption multivariate public key cryptosystem generated according to claim 1,
said method being performed by a decryption device (100) comprising a processing system (101), an interface (106) and a memory (105) configured for storing said secret linear transformations S and T and comprising the steps of:

    - receiving (D1), on said interface, said at least one ciphertext from an encryption device,
    - for e from 0 to r, e being an hypothetical integer number of non-zero products of linear forms added to each equation of said public or secret system of polynomial equations: performing (D2), by said processing system, decryption attempts of said at least one ciphertext to generate a cleartext using said stored secret linear transformations S and T for all possible selections of e non-zero products of linear forms among said r products of linear forms added to each equation,
    - outputting (D3), on said interface, as a result of decryption of said at least one ciphertext an output result equal to a cleartext generated by a successful decryption attempt.

6. The method of claim 5, comprising stopping decryption attempts when a decryption attempt is successful.

7. The method of claim 5, comprising performing a predetermined number of decryption attempts before outputting said result of said decryption.

8. The method of any one of claims 5 to 7, wherein receiving at least one ciphertext (D1) comprises receiving a plurality of ciphertexts of messages encrypted with the public transformation of said modified encryption multivariate public key cryptosystem and performing decryption attempts of said ciphertexts for a given value of said hypothetical integer number e (D2) comprises performing decryption attempts of all ciphertexts for all possible selections of e non-zero products of linear forms before performing decryption attempts for the next value of said hypothetical integer number e.

9. The method of any one of claims 5 to 7, wherein receiving at least one ciphertext (D1) comprises receiving a plurality of ciphertexts of messages encrypted with the public transformation of said modified encryption multivariate public key cryptosystem and performing decryption attempts (D2) comprises performing said decryption attempts for all received ciphertexts in parallel.

10. The method of claim 8 or 9, wherein said plurality of messages encrypted with the public transformation of said modified encryption multivariate public key cryptosystem are different session keys; and said method comprises transmitting to the encryption device an indication of which session key has been successfully decrypted.

11. The method of claim 10, comprising transmitting to the encryption device a signature of said indication, generated using a secret key of a public key signature algorithm.

12. The method of claim 8 or 9, wherein said plurality of messages encrypted with the public transformation of said modified encryption multivariate public key cryptosystem are transformed values of a unique cleartext, wherein all said transformed values are generated by transforming said unique cleartext using a publicly available transformation, parameters of said publicly available transformation being shared between said encryption device and said decryption device; and said method comprises undoing said publicly available transformation on said output result which has been output as result of decryption using the appropriate shared parameters.

13. The method of claim 12, wherein said publicly available transformation is a symmetric encryption algorithm; all said transformed values are generated by encrypting with a different symmetric key said unique cleartext using said symmetric encryption algorithm, said keys being shared between said encryption device and said decryption device; and said method comprises deciphering said output result which has been output as result of decryption using the appropriate shared key.

**14.** A computer program product directly loadable into the memory of at least one computer, comprising software code instructions for performing the steps of any of claims 5 to 13, when said product is run on the computer.

**15.** A decryption device (100) for securing decryption of at least one ciphertext $(y_1, ..., y_m)$ of a message $(x_1,..., x_n)$ encrypted with the public transformation of a modified encryption multivariate public key cryptosystem generated according to claim 1, said decryption device comprising a processing system (101), an interface (106) and a memory (105) wherein:

- said memory stores said secret linear transformations S and T,
- said interface receives said at least one ciphertext from an encryption device,
- for e from 0 to r, e being an hypothetical number of non-zero products of linear forms added to each equation of said public or secret system of polynomial equations: said processing system performs decryption attempts of said at least one ciphertext to generate a cleartext using said stored secret linear transformations S and T for all possible selections of e non-zero products of linear forms among said r products of linear forms added to each equation,
- said interface outputs as a result of decryption of said at least one ciphertext an output result equal to the first cleartext generated by a successful decryption attempt.

[Fig. 1]

**E1** — Determining an integer r in {1,…,m} and t*r secret linear forms $L^1{}_1, \ldots, L^1{}_n, \ldots, L^t{}_1, \ldots, L^t{}_r$ in $a_1, \ldots, a_n$ or $x_1, \ldots, x_n$

**E2** —
$$y_j = P'_j(x_1,\ldots,x_n) \text{ with } P'_j = P_j + \sum_{i=1}^{r} \alpha_{i,j} \prod_{k=1}^{t} L_i^k \text{ or}$$
$$b_j = A'_j(a_1,\ldots,a_n) \text{ with } A'_j = A_j + \sum_{i=1}^{r} \alpha_{i,j} \prod_{k=1}^{t} L_i^k$$

[Fig. 2]

[Fig. 3]

[Fig. 4]

D1 — Receiving at least one ciphertext from an encryption device

D2 — For e from 0 to r : performing, decryption attempts of said at least one ciphertext to generate a cleartext using S and T for all possible selections of e non-zero products of linear forms among the r products of linear forms added to each equation

D3 — Outputting as a result of decryption of said at least one ciphertext an output result equal to a cleartext generated by a successful decryption attempt

[Fig. 5]

**80 bits expected security level (t=2 and r = 12)**

| $e_{max}$ | Probability of successful decryption of a single message | Number of transmitted messages | Total number of decryption attemps |
|---|---|---|---|
| 0 | 3.16 % | 31.5 | 31.5 |
| 1 | 15.8 % | 6.3 | 81.9 |
| 2 | 39.0 % | 2.5 | 198 |
| 3 | 64.8 % | 1.5 | 450 |
| 4 | 84.1 % | 1.2 | 820 |
| 5 | 94.4 % | 1.06 | 1680 |

**100 bits expected security level (t=2 and r = 17)**

| $e_{max}$ | Probability of successful decryption of a single message | Number of transmitted messages | Total number of decryption attemps |
|---|---|---|---|
| 0 | 0.75 % | 133 | 133 |
| 1 | 5.76 % | 17.3 | 311 |
| 2 | 17.12 % | 5.8 | 794 |
| 3 | 36 % | 2.77 | 1886 |
| 4 | 58.1 % | 1.72 | 4093 |
| 5 | 77.3 % | 1.29 | 8007 |

**128 bits expected security level (t=2 and r = 24)**

| $e_{max}$ | Probability of successful decryption of a single message | Number of transmitted messages | Total number of decryption attemps |
|---|---|---|---|
| 0 | 0.1 % | 996 | 996 |
| 1 | 0.9 % | 110 | 2 750 |
| 2 | 3.9 % | 25 | 7 525 |
| 3 | 11.5 % | 8.7 | 20 227 |
| 4 | 24.6 % | 4 | 51 804 |
| 5 | 42.15 % | 2.3 | 128 000 |
| 6 | 60.6 % | 1.6 | 304 000 |

**192 bits expected security level (t=2 and r = 40)**

| $e_{max}$ | Probability of successful decryption of a single message | Number of transmitted messages | Total number of decryption attemps |
|---|---|---|---|
| 0 | 0.001 % | 100 000 | 100 000 ($2^{16.6}$) |
| 1 | 0.014 % | 7 000 | 285 000 ($2^{18.1}$) |
| 2 | 0.101 % | 984 | 800 000 ($2^{19.6}$) |
| 3 | 0.47 % | 213 | $2^{21.2}$ |
| 4 | 1.6 % | 62 | $2^{22.7}$ |
| 5 | 4.3 % | 23 | $2^{24.1}$ |
| 6 | 9.6 % | 10.4 | $2^{25.5}$ |
| 7 | 18.1 % | 5.5 | $2^{26.9}$ |
| 8 | 29.9 % | 3.3 | $2^{28.4}$ |

# EP 4 727 057 A1

## EUROPEAN SEARCH REPORT

**Application Number**

EP 24 30 6667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALINE GOUGET ET AL: "Probabilistic Multivariate Cryptography", 1 January 2007 (2007-01-01), PROGRESS IN CRYPTOLOGY - VIETCRYPT 2006 LECTURE NOTES IN COMPUTER SCIENCE;;LNCS, SPRINGER, BERLIN, DE, PAGE(S) 1 - 18, XP019053247, ISBN: 978-3-540-68799-3 | 1-4 | INV. H04L9/30 |
| A | * sections 2, 3, 4, 5, appendix C, D * | 5-15 | |
| A | COGLIATI BENOÎT ET AL: "State of the Art of HFE Variants", 11 June 2024 (2024-06-11), POST-QUANTUM CRYPTOGRAPHY; [LECTURE NOTES IN COMPUTER SCIENCE; LECT.NOTES COMPUTER], SPRINGER NATURE SWITZERLAND, CHAM, PAGE(S) 144 - 167, XP047702165, ISSN: 0302-9743 ISBN: 978-3-031-62745-3 [retrieved on 2024-06-11] * sections 2, 5, 7 * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 12 March 2025 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Hidden fields equations (HFE) and isomorphisms of polynomials (IP): Two new families of asymmetric algorithms. **JACQUES PATARIN**. EUROCRYPT'96, volume 1070 of LNCS. Springer, May 1996, 33-48
- **JEAN-CHARLES FAUGÈRE** ; **GILLES MACARIO RAT** ; **JACQUES PATARIN,** ; **LUDOVIC PERRET**. A new perturbation for multivariate public key schemes such as HFE and UOV. *Cryptology ePrint Archive*, 2022, https://eprint.iacr.org/2022/203
- **MATSUMOTO, T** ; **IMAI, H.** *Public Quadratic Polynomial-Tuples for Efficient Signature-Verification and Message-Encryption.*, 1988

- Advances in Cryptology - EUROCRYPT '88. EUROCRYPT. **BARSTOW, D., et al.** Lecture Notes in Computer Science. Springer, 1988, vol. 330
- **GILLES MACARIO-RAT** ; **JACQUES PATARIN**. Two-Faces: New Public Key Multivariate Schemes. *AFRICACRYPT 2018* (10831), 252-265
- **BILLET, O.** ; **PATARIN, J.** ; **SEURIN, Y.** Analysis of Intermediate Field Systems.. *IACR Cryptol. ePrint Arch.*, 2009, 542
- **JEAN-CHARLES FAUGÈRE** ; **GILLES MACARIO RAT** ; **JACQUES PATARIN** ; **LUDOVIC PERRET**. A new perturbation for multivariate public key schemes such as HFE and UOV. *Cryptology ePrint Archive, Report 2022/203*, 2022, https://eprint.iacr.org/2022/203